(19) Europäisches Patentamt European Patent Office Office européen des brevets

(11) **EP 1 944 891 B1**

(12) **EUROPEAN PATENT SPECIFICATION**

(45) Date of publication and mention
of the grant of the patent:
**18.07.2012 Bulletin 2012/29**

(51) Int Cl.:
***H04L 27/26*** (2006.01)

(21) Application number: **06796421.3**

(22) Date of filing: **15.08.2006**

(86) International application number:
**PCT/JP2006/316031**

(87) International publication number:
**WO 2007/052397 (10.05.2007 Gazette 2007/19)**

(54) **Transmitting/receiving system, transmitting apparatus, and pilot signal multiplexing method used in them**

Sende-/Empfangssystem, Sendevorrichtung und darin verwendetes Pilotsignal-Multiplexverfahren

Système de transmission/reception, appareil de transmission et procédé de multiplexage de signal pilote utilise dedans

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.10.2005 JP 2005315545**

(43) Date of publication of application:
**16.07.2008 Bulletin 2008/29**

(73) Proprietor: **NEC Corporation**
**Minato-ku**
**Tokyo 108-8001 (JP)**

(72) Inventors:
• **OKETANI, Kengo**
**Tokyo 1088001 (JP)**
• **SATO, Toshifumi**
**Tokyo 1088001 (JP)**
• **KAKURA, Yoshikazu**
**Tokyo 1088001 (JP)**
• **YOSHIDA, Shousei**
**Tokyo 1088001 (JP)**
• **KOYANAGI, Kenji**
**Tokyo 1088001 (JP)**

(74) Representative: **Stork Bamberger**
**Patentanwälte**
**Postfach 73 04 66**
**22124 Hamburg (DE)**

(56) References cited:
WO-A1-2004/043028    WO-A1-2005/013525
WO-A1-2005/074178    WO-A1-2005/089006
WO-A2-03/075500      JP-A- 2001 238 269

• FEMENIAS G: "Reference-based dual switch and stay diversity systems over correlated Nakagami fading channels", IEEE TRANSACTIONS ON VEHICULAR TECHNOLOGY, IEEE SERVICE CENTER, PISCATAWAY, NJ, US, vol. 52, no. 4, 1 July 2003 (2003-07-01), pages 902-918, XP011100089, ISSN: 0018-9545, DOI: DOI: 10.1109/TVT.2003.814217
• COON J., BEACH M., MCGEEHAN J.: 'Optimal training sequences for channel estimation in cyclic-prefix-based single-carrier systems with transmit diversity' SIGNAL PROCESSING LETTERS, IEEE vol. 11, no. 9, September 2004, pages 729 - 732, XP011117263
• 3GPP TR25.814 V.0.3.0 October 2005, pages 29 - 37, XP003002200
• FALCONER D. ET AL.: 'Frequency domain equalization for single-carrier broadband wireless systems' IEEE COMMUN. MAG. vol. 40, no. 4, April 2002, pages 58 - 66, XP001102462

**Description**

Technical Field

The present invention relates to a transmitting/receiving system, a transmitting apparatus and a pilot signal multiplexing method used in them and, more particularly, to a pilot signal multiplexing method that reduces a ratio of peak to average power in a single carrier transmission system.

Background Art

Beyond 3G (3rd Generation) systems conventionally employ single carrier transmission systems and OFDM (Orthogonal Frequency Division Multiplexing) systems as candidates for an up link wireless access system.

However, the single carrier transmission system prevails in terms of a ratio of peak to average power that shows a difference between peak power and average power (for example, see Non-Patent Document 1). The reasons are described in detail below.

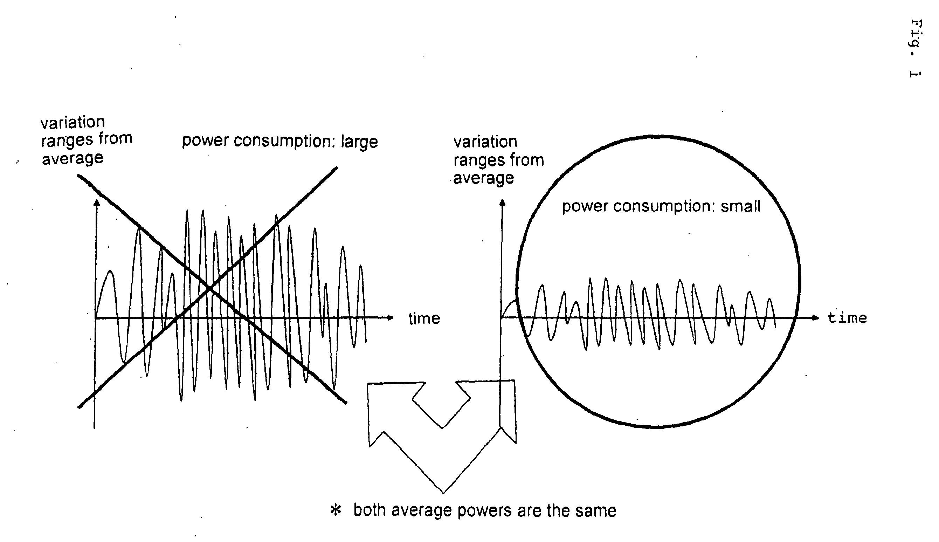

In the case of transmitting signals with the same average power, transmitting a signal with a small ratio of peak to average power is more preferable in terms of power consumption of a mobile station, as shown in Figure 1. Figure 1 shows variation ranges from the average power on a time basis in the case of transmitting the signals having the same average power.

Generally, many OFDM symbols have a very large ratio of peak to average power. However, symbols with a relatively small ratio of peak to average power also exist among all of the OFDM symbols. Thus, using such an OFDM symbol as a pilot signal reduces the ratio of peak to average power with respect to a pilot signal. This is because a pilot signal is defined in advance, and an OFDM symbol with a small ratio of peak to average power can be used as a pilot signal.

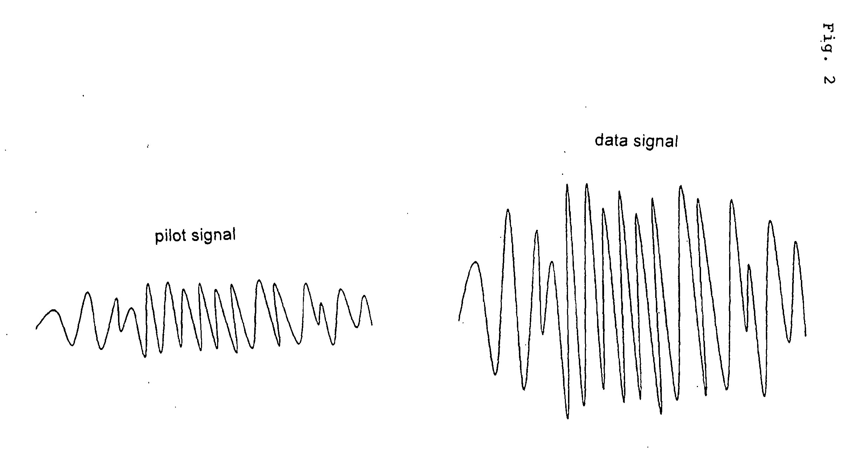

On the other hand, a data signal in the OFDM system is generated from a random sequence, and therefore, a problem about a large ratio of peak to average power cannot be solved as shown in Figure 2.

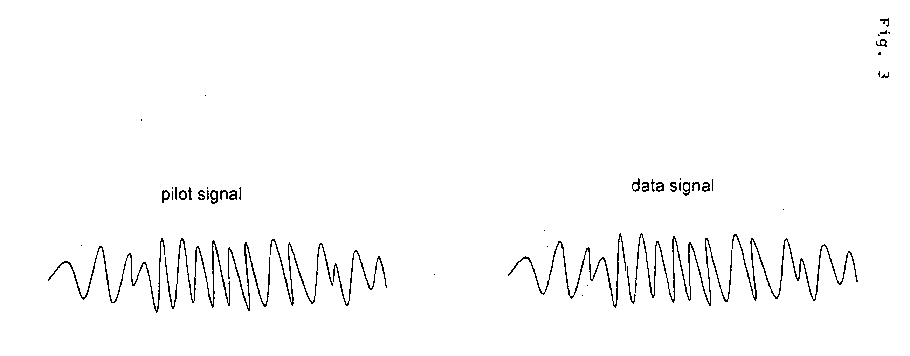

Generally, as shown in Figure 3, a ratio of peak to average power of a signal in the single carrier transmission system is smaller than the ratio of the OFDM system shown in Figure 2.

Because of the reasons above, the single carrier transmission system having a small ratio of peak to average power is prevalent in the Beyond 3G system.

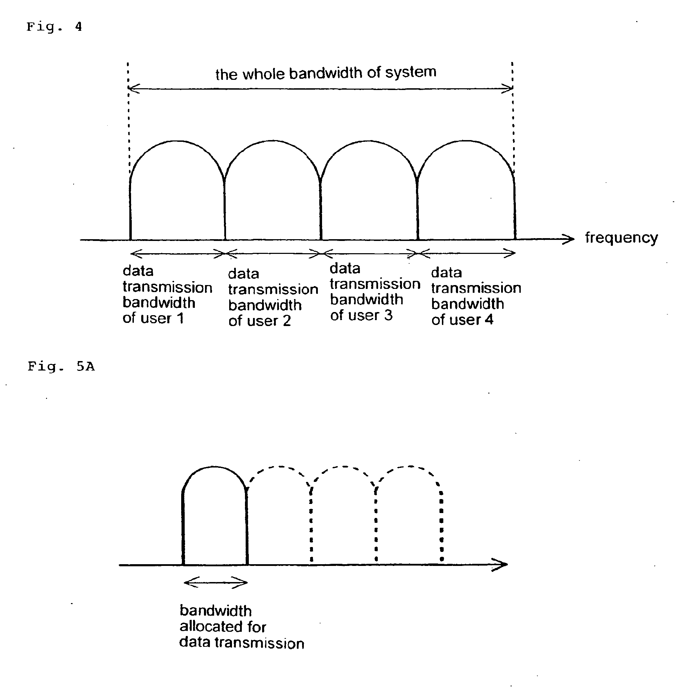

In the single carrier transmission system as shown in Figure 4, the whole bandwidth of the system (1.25 to 20 MHz) is frequency-divided for use by a plurality of users and the respective user performs data transmission by a single carrier transmission.

Propagation path estimation in a conventional single carrier transmission system is performed by obtaining correlation on a temporal axis. Thus, a PN (Pseudo Noise) sequence, which has a good auto-correlation characteristic in a time domain, or a sequence in accordance with it is transmitted as a pilot sequence for the propagation path estimation.

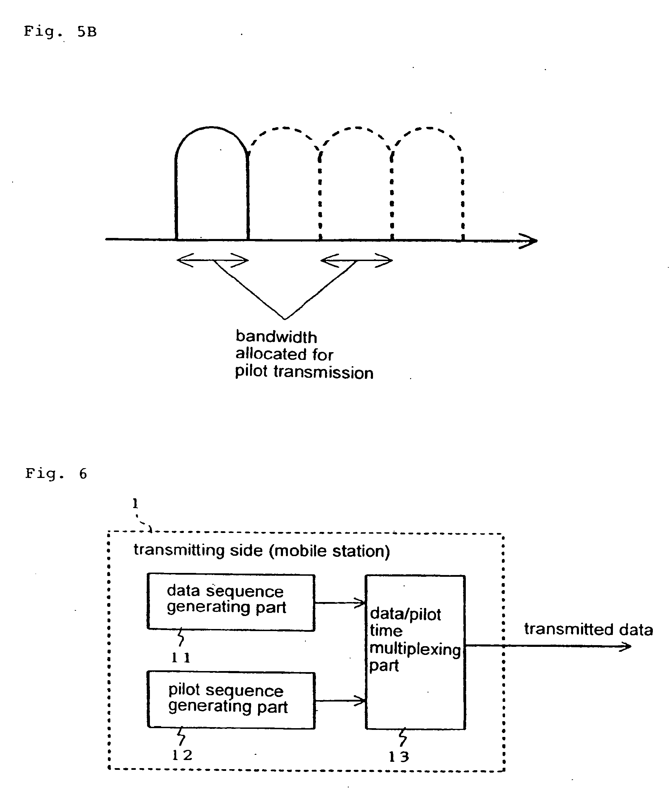

If scheduling across a plurality of frequency blocks is performed, it is necessary to transmit the pilot sequence even in a transmission bandwidth other than that of the current data channel, as shown in Figures 5A and 5B. In this case, a multi-carrier transmission is employed.

In a propagation path estimation method in the conventional single carrier transmission system described above, correlation is taken on the temporal axis, and the number of paths that can be separated increases as the transmission bandwidths increase, so that its characteristic is significantly deteriorated under the strong influence of multipath interference. Because of this, a frequency domain estimation method similar to the OFDM system is proposed as a propagation path estimation method.

However, the PN sequence or a sequence in accordance with it is transmitted as a pilot symbol in the conventional single carrier transmission system. Since these sequences do not have a constant amplitude in a frequency domain, a problem arises in which the accuracy of propagation path estimation in the frequency domain varies at every subcarrier.

A more detailed description is available in this respect.

The k th (k = 1, 2, ... , K) subcarrier component of a pilot sequence that is propagated in a frequency selective fading channel to be received is expressed by the following formula 1.

### [Formula 1]

$$R(k) = H(k)P(k) + N(k)$$
$$k = 1, 2, \cdots, K$$

where k is the number of subcarriers of a bandwidth for transmitting data; R (k) is the k th subcarrier component of the received pilot sequence; H (k) is the k th subcarrier component of the propagation path; P (k) is the k th subcarrier component of a transmitted pilot sequence; and N (k) is the k th subcarrier component of noise.

Further, a channel estimation value of the respective subcarrier in the frequency domain is expressed by the following formula 2.

### [Formula 2]

$$\hat{H}(k) = \frac{R(k)}{P(k)} = H(k) + \frac{N(k)}{P(k)}, (k = 1, 2, \cdots, K)$$

$\hat{H}(k)$: Channel estimation value of the k th subcarrier component

Generally, an amplitude in the frequency domain of the PN sequence, or |P(k)|, has different values at every subcarrier number k (k=1, 2, ..., K), that is, it is not constant at all of the subcarriers. As a result, if the PN sequence is used as a pilot signal, a problem arises in which, in the case of a subcarrier having a relatively small |P(k)|, multiplying a n inverse thereof by a noise component causes noise emphasis and the channel estimation accuracy of the subcarrier is significantly deteriorated.

Additionally, if scheduling is performed across a plurality of frequency blocks, it is necessary to transmit a pilot sequence simultaneously to the plurality of frequency blocks where scheduling is possibly performed. In this case, a multi carrier transmission is employed, thereby causing a problem in which the ratio of peak to average power increases.

Here, a supplementary explanation about the increase of the ratio of peak to average power is provided.

Initially, "a probability accumulation complementary function C-CDF (A) of an amplitude of time series of length N {d1, d2, ..., dN}" is defined by the following formula 3.

### [Formula 3]

$$C-CDF(A) = \frac{\text{The number of elements in which} |d_i|^2 \ (i = 1, 2, \cdots, N) \text{ is } A \text{ times or more than } Ave|d^2| \text{ among} \{d_1, d_2, \cdots, d_N\}}{N}$$

wherein, $Ave|d^2| = \dfrac{\sum\limits_{i=1}^{N} |d_i|^2}{N}$

"A ratio of peak to average power increases" means that elements in which their magnitude (here, the square of their amplitude) is higher than the constant times of the average value form a larger proportion of all elements.

When using the probability accumulation complementary function C-CDF(A) defined above, "a ratio of peak to average power increases" also means that the value of the probability accumulation complementary function C-CDF (A) increases with respect to a certain constant A.

Non-Patent Document 1: "Physical Layer Aspects for Evolved UTRA" (3GPP TR 25.814 VO. 2,1 [2005-08]) (particularly, chapter 9)

**XP11117263** discloses an optimal training sequences for channel estimation in cyclic-prefix-based singlecarrier systems with transmit Diversity.

The subject-matter disclosed below in the description and going beyond the scope of the claims has to be considered as examples and not embodiments even if the words like "embodiment", "object", "invention", "spirit", or the like are used in said description.

Disclosure of the Invention

An object of the present invention is to solve the above problems and to provide a transmitting/receiving system, a transmitting apparatus, in which the increase of a ratio of peak to average power can be suppressed without varying the accuracy of propagation path estimation in a frequency domain at every subcarrier, and a pilot signal multiplexing method used in them.

A transmitting/receiving system of the present invention comprises a plurality of mobile stations communicating simultaneously using a single carrier transmission system, wherein each of the plurality of mobile stations comprises means for transmitting as a pilot signal a sequence which is equal to a sequence with a ratio of peak to average power that is smaller than a predetermined value set in advance among all OFDM symbols.

Specifically, the transmitting/receiving system of the present invention is characterized in that the mobile station (user) transmits the pilot signal with a constant frequency response and a small ratio of peak to average power to a base station, so that it is possible to estimate a propagation path and quality of the propagation path accurately in a frequency domain with power efficiency of the mobile station (user) maintained high.

A transmitting/receiving system in a first aspect of the present invention is a system where a plurality of mobile stations (users) communicate simultaneously using a single carrier transmission system, wherein a sequence which is equal to or lower than a sequence with a relatively small ratio of peak to average power (hereinafter, a sequence with a small ratio of symbol peak to average power) is transmitted as a pilot signal among OFDM symbols after transforming a signal in a frequency domain to a signal in a time domain {after Inverse Fourier Transformation, particularly after Inverse Fast Fourier Transformation [hereinafter, IFFT (Inverse Fast Fourier Transformation)]}. Note that IFFT is a fast algorithm transforming a signal in a frequency domain to that of in a time domain.

A transmitting/receiving system in a second aspect of the present invention is the transmitting/receiving system of the first aspect, wherein a phase is selected randomly from a limited phase set, IFFT is performed to sequences having a constant amplitude including the phase in a frequency domain, and a sequence with a small ratio of peak to average power after IFFT is selected, thereby obtaining the sequence that has a constant amplitude on a frequency axis and a small ratio of peak to average power after IFFT.

A transmitting/receiving system in a third aspect of the present invention is the transmitting/receiving system of the first aspect, wherein a transmitting side transmits the sequence with a small ratio of peak to average power after IFFT as a pilot sequence with respect to a frequency block having a possibility of being scheduled, and a receiving side estimates a propagation path and quality of the propagation path by using the pilot signal transmitted.

A transmitting/receiving system in a fourth aspect of the present invention is the transmitting/receiving system of the first aspect, wherein every user is allocated a variable frequency block (bandwidth with a possibility of being scheduled) and a sequence with a small ratio of peak to average power after IFFT is set as a pilot sequence in accordance with an allocation pattern of the frequency block.

A transmitting/receiving system in a fifth aspect of the present invention is the transmitting/receiving systems of the first and third aspects, wherein, in the case where the contiguous frequency blocks are allocated, a sequence with a small ratio of peak to average power after IFFT is set as a pilot sequence in accordance with an allocation pattern of the frequency blocks.

A transmitting/receiving system in a sixth aspect of the present invention is the transmitting/receiving systems of the first and third aspects, wherein, in the case where the discontinuous frequency blocks are allocated, a sequence with a small ratio of peak to average power after IFFT is set as a pilot sequence in accordance with an allocation pattern of the frequency blocks.

A transmitting/receiving system in a seventh aspect of the present invention is the transmitting/receiving system of the first aspect, wherein information about which pilot pattern to use is sent from the base station to the mobile station (user) through a control channel.

Thus, in the transmitting/receiving system of the present invention, the problem that the accuracy of the propagation path estimation varies at every subcarrier in the frequency domain and the problem that the ratio of peak to average power increases are solved, by means of transmitting the sequence with the small ratio of peak to average power after IFFT as the pilot sequence.

As described above, it is known that OFDM signals generally have a large ratio of peak to average power compared with single carrier signals. However, among all of the OFDM symbols, symbols with a relatively small ratio of peak to average power (symbols having a ratio of peak to average power as much as that of a data part of the single carrier transmission system) also exist.

Accordingly, the problem that the accuracy of the propagation path estimation varies at every subcarrier in the frequency domain can be solved without increasing the ratio of peak to average power, by using as the pilot sequence the sequence which has a constant amplitude (the nature of $|P(k)|$ = constant in Background Art) on a frequency axis and a small ratio of peak to average power after IFFT for the transmitted pilot sequence.

Also, as shown in Figure 5, if transmitting the pilot across a plurality of frequency blocks is also required, the problem of increasing the ratio of peak to average power can be solved by means of transmitting the sequence, that has a constant amplitude component, on a frequency axis only in the corresponding frequency (a frequency bandwidth needed to measure the quality of propagation), that maps "0" in the other frequency bandwidths, and that has the small ratio of peak to average power after IFFT.

As described above, in the transmitting/receiving system of the present invention, since the sequence with a constant amplitude ($|P(k)|$ = constant) in the frequency domain is used as the transmitted pilot sequence, it is possible to avoid the problem in the related art in which the accuracy of propagation path estimation varies at every subcarrier in the frequency domain, and therefore, it is possible to use a channel estimation value suitable to an equalization process or the like after that.

Additionally, in the transmitting/receiving system of the present invention, if the pilot is transmitted across the plurality of frequency blocks, the problem in which a multi-carrier transmission is employed for transmitting a conventional PN sequence can be avoided by means of transmitting the sequence that has a constant amplitude component on the frequency axis only in the corresponding frequency, maps "0" in the other frequency bandwidths, and that has the small ratio of peak to average power after IFFT.

A transmitting apparatus of the present invention is used for a transmitting/receiving system having a plurality of mobile stations that communicate simultaneously using a single carrier transmission system, and comprises means for transmitting as a pilot signal a sequence which is equal to a sequence with a ratio of peak to average power smaller than a predetermined value set in advance among all OFDM symbols.

A pilot signal multiplexing method of the present invention is used for a transmitting/receiving system having a plurality of mobile stations that communicate simultaneously using a single carrier transmission system, wherein each of the plurality of mobile stations performs a step of transmitting as a pilot signal a sequence which is equal to a sequence with a ratio of peak to average power smaller than a predetermined value set in advance among all OFDM symbols.

Brief Description of the Drawings

Figure 1 shows diagrams illustrating a ratio of peak to average power;
Figure 2 shows diagrams illustrating a ratio of peak to average power of an OFDM symbol;
Figure 3 shows diagrams illustrating a ratio of peak to average power of a single carrier transmission system;
Figure 4 is a diagram showing the single carrier transmission for individual users;
Figure 5A is a diagram showing the single carrier transmission when scheduling across a plurality of frequency blocks is performed;
Figure 5B a diagram showing the single carrier transmission when scheduling across a plurality of frequency blocks is performed;
Figure 6 is a block diagram showing an exemplary configuration of a transmitting apparatus (mobile station) that serves as the transmitting side of a pilot signal according to an exemplary embodiment of the present invention;
Figure 7 is a block diagram showing an exemplary configuration of a transmitting apparatus (base station) that serves as the receiving side of a pilot signal according to the exemplary embodiment of the present invention;
Figure 8 shows diagrams illustrating exemplary operations of the transmitting apparatus (mobile station) that serves as the transmitting side according to the exemplary embodiment of the present invention;
Figure 9 shows diagrams illustrating another exemplary operations of the transmitting apparatus (mobile station) that serves as the transmitting side according to the exemplary embodiment of the present invention;
Figure 10 is a flowchart showing a method for searching a sequence used in a pilot sequence generating part according to the exemplary embodiment of the present invention; and
Figure 11 is a block diagram showing a configuration of a transmitting/receiving system according to another exemplary embodiment of the present invention.

Best Mode for Carrying Out the Invention

Now, an exemplary embodiment of the present invention is described with reference to the drawings.

Figure 6 is a block diagram showing an exemplary configuration of a transmitting apparatus (mobile station) that serves as the transmitting side of a pilot signal according to an exemplary embodiment of the present invention.

In Figure 6, transmitting apparatus (mobile station) 1 that serves as the transmitting side comprises data sequence generating part 11, pilot sequence generating part 12, and data/pilot time multiplexing part 13.

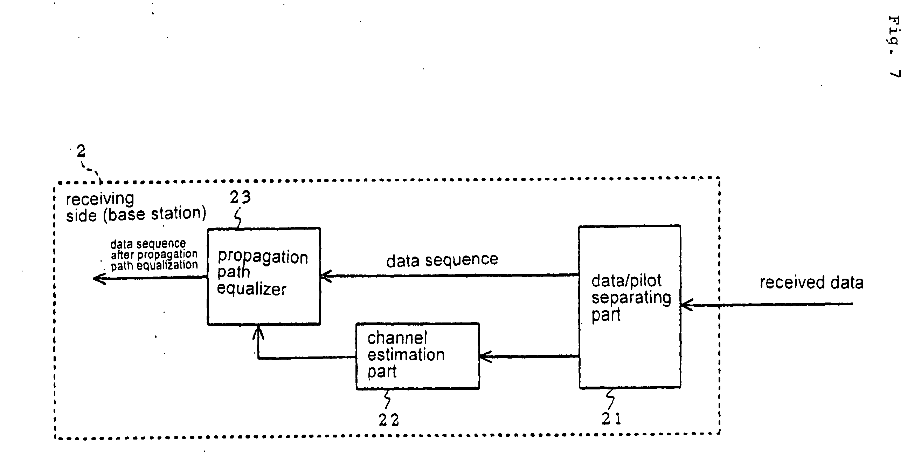

Figure 7 is a block diagram showing an exemplary configuration of a transmitting apparatus (base station) that serves as the receiving side of a pilot signal according to the exemplary embodiment of the present invention.

In Figure 7, transmitting apparatus (base station) 2 that serves as the receiving side comprises data/pilot separating part 21, channel estimation part 22, and propagation path equalizer 23.

Transmitting apparatus (mobile station) 1 that serves as the transmitting side employs a single carrier transmission system for transmitting an up signal to transmitting apparatus (base station) 2 that serves as the receiving side. Specifically, transmitting apparatus (mobile station) 1 that serves as the transmitting side transmits as a pilot signal a sequence (hereinafter, a sequence with a small ratio of symbol peak to average power) which is equal to or lower than a sequence with a relatively small ratio of peak to average power among OFDM symbols after transforming a signal in a frequency domain to a signal in a time domain (after Inverse Fourier Transformation, particularly after IFFT). Note that IFFT is a fast algorithm that transforms a signal in a frequency domain to a signal in a time domain.

Here, "a sequence with a small ratio of peak to average power" is defined by using the probability accumulation complementary function C-CDF(A) and the two real numbers $\alpha(\alpha \geq 1)$ and $\beta \leq (0 \leq \beta \leq 1)$ defined above. Thus, "a sequence with a small ratio of peak to average power" is defined by "a sequence with the probability accumulation complementary function C-CDF$(\alpha)<\beta$".

For example, in the case of setting of $\alpha=2$, $\beta=0.01$ (i.e. in the case where the proportion of double power is 0.01), "a sequence with a small ratio of peak to average power" can be defined by "a sequence with the probability accumulation complementary function C-CDF(2)<0.01". However, even in the case where the peak power increases suddenly, the peak power is physically substituted for the maximum transmission power set at the transmitting side for transmission. Additionally, in the above example, reducing the proportion of double power can reduce the possibility of influencing "a sequence with a small ratio of peak to average power".

Now, operations of transmitting apparatus (mobile station) 1 that serves as the transmitting side will be described.

Data sequence generating part 11 encodes transport information and pilot sequence generating part 12 maps a pilot sequence that has a small ratio of peak to average power designated in advance.

A method for finding such a pilot sequence with the small ratio of peak to average power will be described later. In the exemplary embodiment, it is assumed that the sequence having the probability accumulation complementary function C-CDF$(\alpha)<\beta$ has already been searched where the two real numbers $\alpha$, $\beta$ are set as described above, and a sequence used in transmitting apparatus (mobile station) 1 that serves as the transmitting side has been designated.

Data/pilot time multiplexing part 13 time-multiplexes the data generated at data sequence generating part 11 and the pilot sequence generated at pilot sequence generating part 12 for transmission. In pilot sequence generating part 12, information about a pilot sequence set in advance is stored, and when a designation is made as to which information is to be selected, the pilot sequence is generated by using the designated information.

Now, operations of transmitting apparatus (base station) 2 that serves as the receiving side is described.

In transmitting apparatus (base station) 2 that serves as the receiving side, data/pilot separating part 21 initially separates received data into a data sequence and a pilot sequence, then the separated received data sequence is passed to propagation path equalizer 23 and the separated received pilot sequence is passed to channel estimation part 22.

Channel estimation part 22 performs channel estimation in a frequency domain by using input received pilot sequence and transmitted pilot sequence (the transmitted pilot sequence is known in transmitting apparatus [base station] 2 that serves as the receiving side). A channel estimation value can be obtained by using formula 2, that is, by dividing each subcarrier component of the received pilot by each subcarrier value of the transmitted pilot after transforming the transmitted/received pilot sequences to the frequency domain. The channel estimation value obtained at channel estimation part 22 is passed to propagation path equalizer 23.

The exemplary embodiment uses a sequence with a constant amplitude ($|P(k)|$ = constant) in the frequency domain as a transmitted pilot sequence. Therefore, it is noted that the problem in the related art can be avoided in which using a PN sequence as a pilot sequence causes noise emphasis during channel estimation , thereby varying the accuracy of channel estimation among subcarriers.

Propagation path equalizer 23 performs a propagation path equalization process for the received data by using the input received data and the channel estimation value, and a data sequence after the propagation path equalization is output. After that, the data sequence after propagation path equalization is decoded at a decoding part (not-shown).

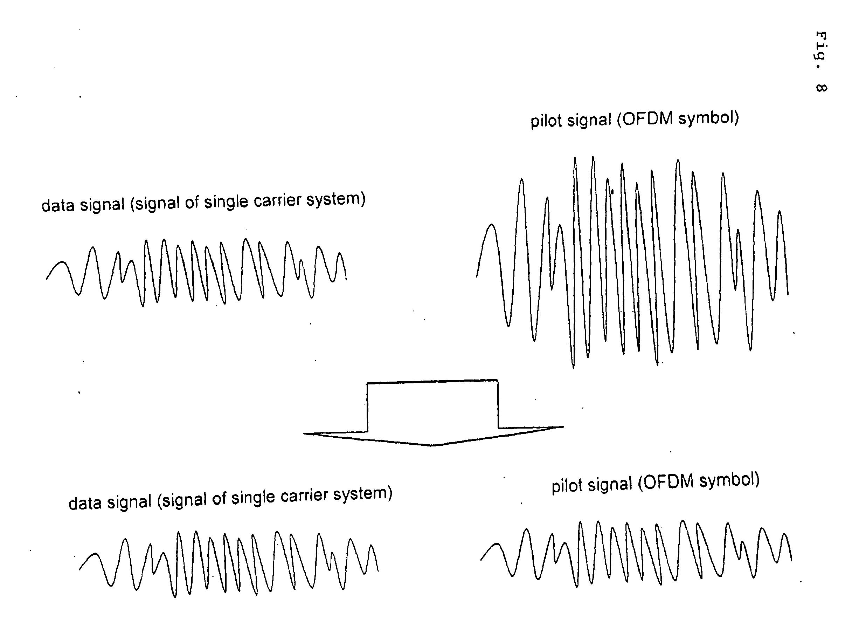

Figure 8 shows diagrams illustrating exemplary operations of transmitting apparatus (mobile station) 1 that serves as the transmitting side according to the exemplary embodiment of the present invention. Figure 8 shows waveforms of transmission power in the case of using a signal of the single carrier transmission system for a data signal and an OFDM signal for a pilot sequence.

If the OFDM signal is applied to the pilot sequence, a possibility arises in which the ratio of peak to average power of the pilot signal increases in accordance with the waveforms shown at the upper side of Figure 8. Since a pilot sequence is defined in advance, it is possible to solve the problem by transmitting an OFDM symbol having a relatively small ratio of peak to average power (if possible, an OFDM symbol that has a ratio of peak to average power as much as that of a data signal of the single carrier transmission system) as a pilot sequence (see the waveforms shown at the lower side of Figure 8).

In this case, a sequence with a ratio of peak to average power smaller than a predetermined value set in advance may be selectively used among all of the OFDM symbols. In addition, the predetermined value may be set within the tolerance when transmitting apparatus (mobile station) 1 that serves as the transmitting side is designed.

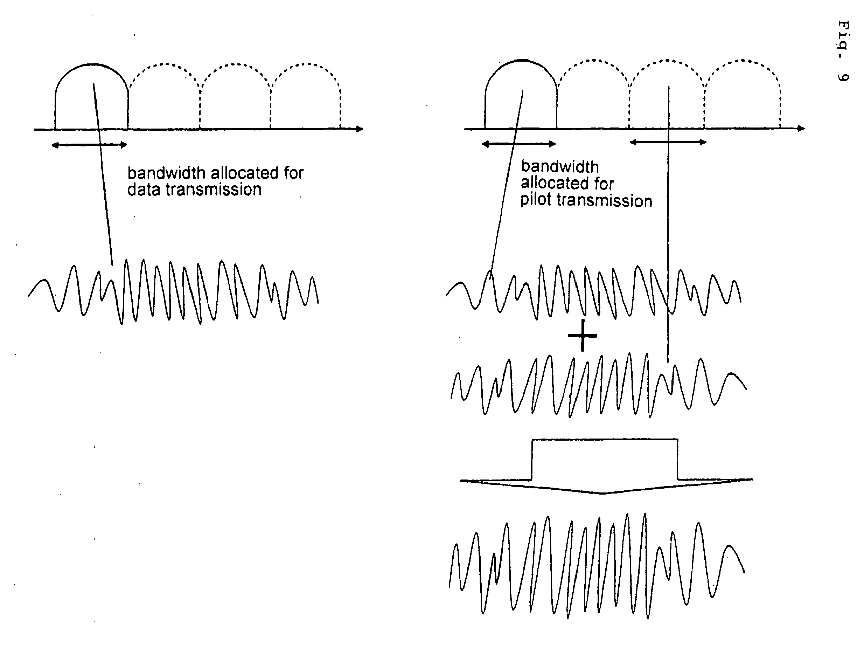

Figure 9 shows diagrams illustrating another exemplary operation of transmitting apparatus (mobile station) 1 that serves as the transmitting side according to the exemplary embodiment of the present invention. Figure 9 shows waveforms of transmission power in the case where transmitting a pilot sequence across a plurality of frequency blocks as shown in Figure 5B is required.

In the above case, the waveform of a data signal is similar to that of the data signal shown in Figure 8 since a signal of the single carrier transmission system is used for the data signal. However, as shown in Figure 9, the waveform of a pilot signal indicates that the ratio of peak to average power of the pilot signal increases since pilot signals allocated across the plurality of frequency blocks are added up in the waveform.

In this case, a sequence is selected as a pilot sequence in advance in which the ratio of peak to average power does not increase significantly when the pilot signals allocated across the plurality of frequency blocks are added up. As a result, the problem of an increase in the ratio of peak to average power of the pilot signals added up can be solved.

Thus, in the exemplary embodiment, a sequence with a small ratio of peak to average power after IFFT is transmitted as a pilot signal. As a result, it is possible to solve the problem in which the accuracy of propagation path estimation varies at every subcarrier in the frequency domain and the problem in which the ratio of peak to average power increases.

Thus, in the exemplary embodiment, a sequence having a constant amplitude ($|P(k)|$ = constant) in the frequency domain is used as a transmitted pilot sequence. As a result, it is possible to avoid the problem in the related art where using a PN sequence as a pilot sequence causes noise emphasis during channel estimation, thereby varying the accuracy of the channel estimation among subcarriers, and therefore, it is possible to use a channel estimation value suitable to a subsequent propagation path equalization process or the like.

Additionally, in the exemplary embodiment, if a pilot signal is transmitted across a plurality of frequency blocks, a sequence is transmitted which has a constant amplitude component on a frequency axis only in the corresponding frequency bandwidth, that maps "0" in the other frequency bandwidths, and that has a small ratio of peak to average power after IFFT. As a result, the problem of employing a multi-carrier transmission can be avoided in the case of transmitting the conventional PN sequence.

Now, a method for searching a sequence that is used at pilot sequence generating part 12 is described according to the exemplary embodiment of the present invention.

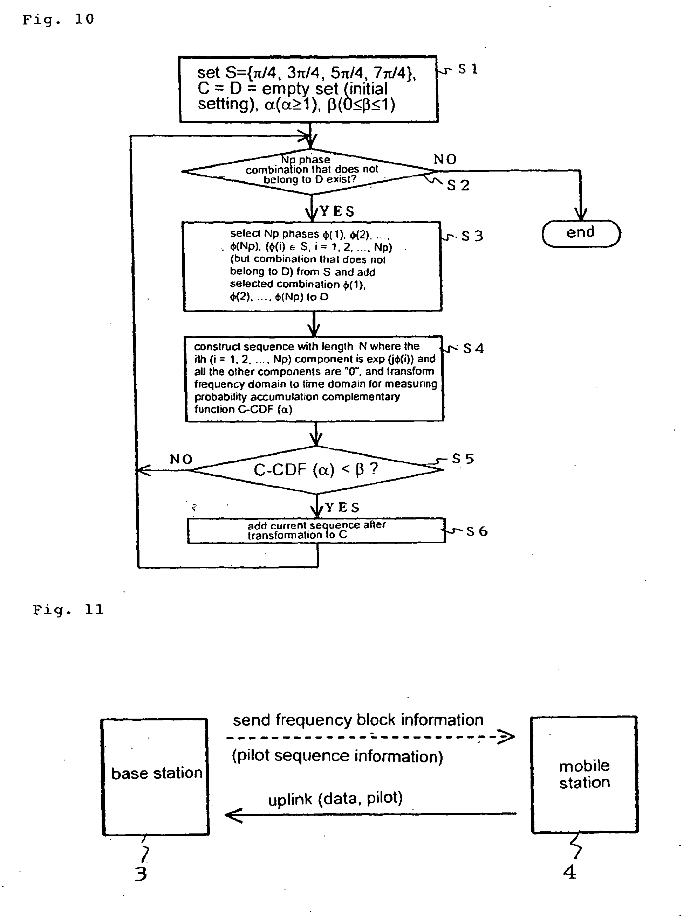

Figure 10 is a flowchart showing the method for searching the sequence that is used at pilot sequence generating part 12 according to the exemplary embodiment of the present invention.

Hereinafter, "a method for generating a sequence with a constant amplitude on a frequency axis and a small ratio of peak to average power after IFFT" according to the exemplary embodiment of the present invention is described with reference to Figures 6, 7 and 10.

It is assumed that the total number of subcarriers (=sequence length) is N; the number of subcarriers to transmit a pilot is Np (Np$\leq$N); the subcarrier number for transmitting the pilot is $k\_1. k\_2, ... , k\_Np$; and real numbers $\alpha (\alpha\geq 1)$, $\beta$ ($0\leq\beta\leq 1$), for example, $\alpha$=2, $\beta$=0.01 may be used as a set example.

Initially, a limited phase set S is defined. Here, as an example, the phase set S is $\{\pi/4, 3\pi/4, 5\pi/4, 7\pi/4\}$, and sets C, D are empty sets (step S1 of Figure 10).

Then, Np phases are selected from the phase set S. The phases selected here are $\phi(1)$, $\phi(2)$, ..., $\phi$ (Np). However, a combination of the Np phases $\{\phi(1), \phi(2), ..., \phi(Np)\}$ is selected from phase combinations except the combination having already been selected (select a combination that does not belong to set D) (steps S2 and S3 of Figure 10). If a set that does not belong to set D does not exist here (step 2 of Figure 10), the algorithm is ended.

Additionally, a sequence with length N is constructed where the i th (i=1, 2, ..., Np) component is $\exp[j\phi (i)]$ (j is an imaginary unit) and all the components except i th component are "0", and a frequency domain of the sequence is transformed to a time domain for measuring C-CDF ($\alpha$) (step S4 of Figure 10). In this case, the configured sequence with length N is processed by IFFT with M-point and C-CDF($\alpha$) of the sequence after IFFT is measured. Increasing the number of points of IFFT here enables peak detection more accurately.

If the result of the measurement satisfies C-CDF($\alpha$)<$\beta$ (step S5 of Figure 10), the sequence that is now obtained after IFFT is added to set C (step 6 of Figure 10). Then, if a combination of Np phases that does not belong to set D still exists, the algorithm returns to step 2 and repeats the operation of selecting Np phases from phase set S. However, if such a sequence does not exist, the algorithm is ended, and a component of set C is finally obtained as an output.

I n determining whether the result of the measurement satisfies C-CDF($\alpha$)<$\beta$ or not, even in the case where the peak power increases suddenly, the peak power is physically substituted for the maximum transmission power set at the transmitting side for transmission.

For example, even in the case of having $\alpha$ times power, reducing the proportion of $\alpha$ times power can reduce the possibility of influencing "a sequence with a small ratio of peak to average power". Thus, reducing $\beta$ can reduce the probability of suddenly increasing the peak power, and therefore, the influence on the signal itself can be reduced. A value of $\beta$ may be set within the tolerance when transmitting apparatus (mobile station) 1 that serves as the transmitting side is designed.

Now, another exemplary embodiment of the present invention is described.

Figure 11 is a block diagram showing a configuration of a transmitting/receiving system according to another exemplary embodiment of the present invention.

In Figure 11, the transmitting/receiving system of another exemplary embodiment of the present invention comprises base station 3 and mobile station 4. The configurations of base station 3 and mobile station 4 are similar to those of transmitting apparatus (base station)2 that serves as the receiving side and transmitting apparatus (mobile station)1 that serves as the transmitting side as shown in Figures 7 and 6 described above.

Operations of the transmitting/receiving system of the another exemplary embodiment of the present invention will be described with reference to Figure 11. In the another exemplary embodiment of the present invention, a case is described where a function is added which sends information about which pilot pattern to use for mobile station (user) 4 from base station 3 to mobile station (user) 4 through a control channel.

Initially, base station 3 searches "a suitable sequence", or "a sequence that has a constant amplitude only at pilot transmitting subcarriers on allocated frequency blocks, that maps "0" other than that and that has a small ratio of peak to average power after IFFT' at every frequency block allocated to mobile station (user) 4 in advance; and the sequence is saved in base station 3. As a search method, for example, the search method described in the exemplary embodiment of the present invention may be used.

When a frequency block allocated to a certain mobile station (user) 4 is determined, base station 3 selects a pilot sequence used by the corresponding mobile station (user) 4 from a set of "a suitable sequence" for the frequency block that has been determined. Then, base station 3 also sends information about the selected pilot sequence when frequency block information is sent.

When the frequency block is allocated to mobile station (user) 4, base station 3 selects a sequence suitable for the frequency as a pilot pattern for transmission. As a result, it is possible for mobile station (user) 4 to use a pilot sequence suitable for the allocated frequency block all the time, and therefore, to maintain power efficiency of mobile station (user) 4 high, even in a transmitting/receiving system where the allocated frequency block is not fixed and where varies continuously.

**Claims**

1. A transmitting/receiving system comprising: a base station; and a plurality of mobile stations communicating using a single carrier transmission system,
   wherein each of the plurality of mobile stations comprises means for transmitting as a pilot signal a sequence which is equal to a sequence with a ratio of peak to average power smaller than a predetermined value set in advance among all OFDM symbols,
   wherein each of the plurality of mobile stations is adapted to select a phase from a limited phase set, transform sequences with a constant amplitude that includes the phase in a frequency domain from a signal in the frequency domain to a signal in a time domain, and is adapted to select the sequence, which is equal to a sequence with the ratio of peak to average power smaller than the predetermined value, from the sequences after the transformation and transmits it as the pilot signal
   **characterised in that**
   each of the mobile stations is adapted to search the sequence by carrying out the following steps:

   1) initially defining a limited phase set S, an empty set C, an empty set D, a real number $\alpha \geq 1$ and a real number $0 \leq \beta \leq 1$,
   2) selecting a number ofNp phases $\phi$ (1), $\phi$ (2), ... $\phi$ (Np) from the phase set S with Np being less or equal to the total number N of subcarriers,

3) selecting a combination $\{\phi(1), \phi(2), ... \phi(Np)\}$ of the Np phases that does not belong to the set D, and adding the selected combination to set D

4) constructing a sequence with length N where the i-th component is exp $[j\phi(i)]$ and all the components except the i-th component are zero,

5) transforming the frequency domain of the constructed sequence to the time domain processing the sequence by Inverse Fourier Transformation,

6) measuring a function C-CDF $(\alpha)$ of the sequence processed by Inverse Fourier Transformation,

7) if the result of the measurement satisfies C-CDF $(\alpha) < \beta$, adding the sequence that is obtained by Inverse Fourier Transformation to the set C,

8) if a combination $\{\phi(1), \phi(2), ... \phi(Np)\}$ of the Np phases that does not belong to the set D still exists, repeating the the steps from step 2, otherwise finally obtaining a component of the set C and outputting it as the sequence.

2. The transmitting/receiving system according to claim 1, wherein each of the plurality of mobile stations is adapted to transmit as the pilot signal the sequence which is equal to a sequence with the ratio of peak to average power smaller than the predetermined value with respect to a frequency block having a possibility of being scheduled when data transmission is performed, and
the base station is adapted to estimate a propagation path and quality of the propagation path by using the pilot signal transmitted when data reception is performed.

3. The transmitting/receiving system according to claim 1, wherein, in the case where each of the plurality of mobile stations is adapted to allocate with a variable frequency block, each of the plurality of mobile stations is adapted to set as the pilot signal the sequence which is equal to a sequence with the ratio of peak to average power smaller than the predetermined value in accordance with an allocation pattern of the frequency blocks.

4. The transmitting/receiving system according to claim 3, wherein each of the plurality of mobile stations is allocated with a contiguous frequency block.

5. The transmitting/receiving system according to claim 3, wherein each of the plurality of mobile stations is allocated with a discontinuous frequency block.

6. The transmitting/receiving system according to claim 1, wherein the base station is adapted to send information to each of the plurality of mobile stations through a control channel about which pilot pattern to use.

7. A transmitting apparatus for communicating using a single carrier transmission system, comprising means for transmitting as a pilot signal a sequence which is equal to a sequence with a ratio of peak to average power smaller than a predetermined value set in advance among all OFDM symbols, wherein the apparatus is adapted to select a phase from a limited phase set, transforms sequences with a constant amplitude including the phase in a frequency domain from a signal in the frequency domain to a signal in a time domain and is adapted to select the sequence which is equal to a sequence with the ratio of peak to average power smaller than the predetermined value from the sequences after the transformation and transmits it as the pilot signal,
**characterised in that**
transmitting apparatus is adapted to search the sequence by carrying out the following steps:

1) initially defining a limited phase set S, an empty set C, an empty set D, a real number $\alpha \geq 1$ and a real number $0 \leq \beta \leq 1$,

2) selecting a number of Np phases $\phi(1), \phi(2), ... \phi(Np)$ from the phase set S with Np being less or equal to the total number N of subcarriers,

3) selecting a combination $\{\phi(1), \phi(2), ... \phi(Np)\}$ of the Np phases that does not belong to the set D, and adding the selected combination to set D

4) constructing a sequence with length N where the i-th component is exp $[j\phi(i)]$ and all the components except the i-th component are zero,

5) transforming the frequency domain of the constructed sequence to the time domain processing the sequence by Inverse Fourier Transformation,

6) measuring a probability accumulation function C-CDF $(\alpha)$ of the sequence processed by Inverse Fourier Transformation,

7) if the result of the measurement satisfies C-CDF $(\alpha) < \beta$, adding the sequence that is obtained by Inverse Fourier Transformation to the set C,

8) if a combination $\{\phi(1), \phi(2), ... \phi(Np)\}$ of the Np phases that does not belong to the set D still exists, repeating the the steps from step 2, otherwise finally obtaining a component of the set C and outputting it as the sequence.

8. The transmitting apparatus according to claim 7, wherein the apparatus is adapted to transmit as the pilot signal the sequence which is equal to a sequence with the ratio of peak to average power smaller than the predetermined value with respect to a frequency block having a possibility of being scheduled when data transmission is performed, and to estimate a propagation path and quality of the propagation path by using the pilot signal transmitted when data reception is performed.

9. The transmitting apparatus according to claim 7, wherein, in the case where variable frequency blocks are allocated, the apparatus is adapted to set as the pilot signal the sequence which is equal to a sequence with the ratio of peak to average power smaller than the predetermined value in accordance with an allocation pattern of the frequency blocks.

10. The transmitting apparatus according to claim 9, wherein a contiguous frequency block is allocated to the apparatus.

11. The transmitting apparatus according to claim 9, wherein a discontinuous frequency block is allocated to the apparatus.

12. The transmitting apparatus according to claim 7, wherein the apparatus is adapted to receive information from a base station through a control channel about which pilot pattern to use.

13. A pilot signal multiplexing method for a transmitting/receiving system in which a plurality of mobile stations communicate using a single carrier transmission system, wherein each of the plurality of mobile stations performs a step of transmitting as a pilot signal a sequence which is equal to a sequence with a ratio of peak to average power smaller than a predetermined value set in advance among all OFDM symbols,
wherein each of the plurality of mobile stations is adapted to select a phase from a limited phase set, transform sequences with a constant amplitude including the phase in a frequency domain from a signal in the frequency domain to a signal in a time domain and is adapted to select the sequence which is equal to a sequence with the ratio of peak to average power smaller than the predetermined value from the sequences after transformation and transmits it as the pilot signal,
**characterised in that**
the sequence is searched by carrying out the following steps:

1) initially defining a limited phase set S, an empty set C, an empty set D, a real number $\alpha \geq 1$ and a real number $0 \leq \beta \leq 1$,
2) selecting a number of Np phases $\phi$ (1), $\phi$ (2), ... $\phi$ (Np) from the phase set S with Np being less or equal to the total number N of subcarriers,
3) selecting a combination $\{\phi$ (1), $\phi$ (2), ... $\phi$ (Np)$\}$ of the Np phases that does not belong to the set D, and adding the selected combination to set D
4) constructing a sequence with length N where the i-th component is exp $[j\phi$ (i)$]$ and all the components except the i-th component are zero,
5) transforming the frequency domain of the constructed sequence to the time domain processing the sequence by Inverse Fourier Transformation,
6) measuring a function C-CDF ($\alpha$) of the sequence processed by Inverse Fourier Transformation,
7) if the result of the measurement satisfies C-CDF ($\alpha$) < $\beta$, adding the sequence that is obtained by Inverse Fourier Transformation to the set C,
8) if a combination $\{\phi$ (1), $\phi$ (2), ... $\phi$ (Np)$\}$ of the Np phases that does not belong to the set D still exists, repeating the the steps from step 2, otherwise finally obtaining a component of the set C and outputting it as the sequence.

14. The pilot signal multiplexing method according to claim 13, wherein each of the plurality of mobile stations transmits as the pilot signal the sequence which is equal to a sequence with the ratio of peak to average power smaller than the predetermined value with respect to a frequency block having a possibility of being scheduled when data transmission is performed, and
a base station estimates a propagation path and quality of the propagation path by using the pilot signal transmitted when data reception is performed.

15. The pilot signal multiplexing method according to claim 13, wherein, in the case where each of the plurality of mobile stations is allocated with a variable frequency block, each of the plurality of mobile stations sets as the pilot signal the sequence which is equal to a sequence with the ratio of peak to average power smaller than the predetermined value in accordance with an allocation pattern of the frequency blocks.

16. The pilot signal multiplexing method according to claim 15, wherein each of the plurality of mobile stations is allocated with a contiguous frequency block.

17. The pilot signal multiplexing method according to claim 15, wherein each of the plurality of mobile stations is allocated with a discontinuous frequency block.

18. The pilot signal multiplexing method according to claim 13, wherein a base station sends information to each of the plurality of mobile stations through a control channel about which pilot pattern to use.

**Patentansprüche**

1. Sende-/Empfangssystem, umfassend: eine Basisstation und eine Mehrzahl Mobilstationen, die unter Verwendung eines Einzelträger-Sendesystems kommunizieren,
   wobei jede der Mehrzahl Mobilstationen Mittel zum Senden einer Sequenz als ein Pilotsignal umfasst, die gleich einer Sequenz mit einem Verhältnis von Spitzen- zu Durchschnittsleistung ist, das kleiner als ein vorbestimmter Wert ist, der unter allen OFDM-Symbolen im Voraus eingestellt wird,
   wobei jede der Mehrzahl Mobilstationen eingerichtet ist, um eine Phase aus einem begrenzten Phasensatz auszuwählen, Sequenzen mit einer konstanten Amplitude, die die Phase in einem Frequenzbereich umfasst, aus einem Signal in dem Frequenzbereich in ein Signal in einem Zeitbereich zu transformieren, und eingerichtet ist, um aus den Sequenzen nach der Transformationen die Sequenz auszuwählen, die gleich einer Sequenz mit einem Verhältnis von Spitzen- zu Durchschnittsleistung ist, das kleiner als ein vorbestimmter Wert ist, und sie als das Pilotsignal sendet,
   **dadurch gekennzeichnet, dass**
   jede der Mobilstationen eingerichtet ist, um die Sequenz zu suchen, indem die folgenden Schritte ausgeführt werden:

   1) anfängliches Definieren eines begrenzten Phasensatzes S, eines leeren Satzes C, eines leeren Satzes D, einer reellen Zahl $\alpha \geq 1$ und einer reellen Zahl $0 \leq \beta \leq 1$,
   2) Auswählen einer Anzahl Np Phasen $\varphi(1)$, $\varphi(2)$, ... $\varphi(Np)$ aus dem Phasensatz S, wobei Np kleiner oder gleich der Gesamtzahl n Unterträger ist,
   3) Auswählen einer Kombination $\{\varphi(1), \varphi(2), ... \varphi(Np)\}$ der Np Phasen, die nicht zu dem Satz D gehört, und Addieren der ausgewählten Kombination zum Satz D,
   4) Erstellen einer Sequenz mit Länge N, wobei die i-te Komponente $\exp[j\varphi(i)]$ ist und alle Komponenten außer der i-ten Komponente null sind,
   5) Transformieren des Frequenzbereichs der erstellten Sequenz in den Zeitbereich, wobei die Sequenz durch inverse Fourier-Transformation bearbeitet wird,
   6) Messen einer Funktion C-CDF $(\alpha)$ der durch inverse Fourier-Transformation bearbeiteten Sequenz,
   7) wenn das Ergebnis der Messung C-CDF $(\alpha) < \beta$ erfüllt, Addieren der Sequenz, die durch inverse Fourier-Transformation erhalten wird, zu dem Satz C,
   8) wenn eine Kombination $\{\varphi(1), \varphi(2), ... \varphi(Np)\}$ der Np Phasen, die nicht zu dem Satz D gehört, noch existiert, Wiederholen der Schritte von Schritt 2, ansonsten abschließend Erhalten einer Komponente des Satzes C und Ausgeben derselben als die Sequenz.

2. Sende-/Empfangssystem nach Anspruch 1, wobei jede der Mehrzahl Mobilstationen eingerichtet ist, um als das Pilotsignal die Sequenz zu senden, die gleich einer Sequenz mit dem Verhältnis von Spitzen- zu Durchschnittsleistung ist, das kleiner als ein vorbestimmter Wert ist, bezogen auf einen Frequenzblock mit einer Möglichkeit, eingeplant zu werden, wenn die Datensendung durchgeführt wird, und
   die Basisstation eingerichtet ist, um einen Ausbreitungspfad und die Qualität des Ausbreitungspfads zu schätzen, indem das Pilotsignal verwendet wird, das gesendet wird, wenn ein Datenempfang durchgeführt wird.

3. Sende-/Empfangssystem nach Anspruch 1, wobei in dem Fall, dass jede der Mehrzahl Mobilstationen so eingerichtet ist, dass ihr ein variabler Frequenzblock zugewiesen wird, jede der Mehrzahl Mobilstationen eingerichtet ist, um als das Pilotsignal die Sequenz einzustellen, die gleich einer Sequenz mit dem Verhältnis von Spitzen- zu Durchschnittsleistung kleiner als der vorbestimmte Wert gemäß einem Zuweisungsmuster der Frequenzblöcke ist.

**4.** Sende-/Empfangssystem nach Anspruch 3, wobei jeder der Mehrzahl Mobilstationen ein benachbarter Frequenzblock zugewiesen ist.

**5.** Sende-/Empfangssystem nach Anspruch 3, wobei jeder der Mehrzahl Mobilstationen ein diskontinuierlicher Frequenzblock zugewiesen ist.

**6.** Sende-/Empfangssystem nach Anspruch 1, wobei die Basisstation eingerichtet ist, um jeder der Mehrzahl Mobilstationen durch einen Steuerkanal Informationen darüber zu senden, welches Pilotmuster zu verwenden ist.

**7.** Sendevorrichtung zum Kommunizieren unter Verwendung eines Einzelträger-Sendesystems, umfassend Mittel zum Senden einer Sequenz als ein Pilotsignal umfasst, die gleich einer Sequenz mit einem Verhältnis von Spitzen- zu Durchschnittsleistung ist, das kleiner als ein vorbestimmter Wert ist, der unter allen OFDM-Symbolen im Voraus eingestellt wird, die Vorrichtung eingerichtet ist, um eine Phase aus einem begrenzten Phasensatz auszuwählen, Sequenzen mit einer konstanten Amplitude umfassend die Phase in einem Frequenzbereich aus einem Signal in dem Frequenzbereich in ein Signal in einem Zeitbereich transformiert und eingerichtet ist, um aus den Sequenzen nach der Transformationen die Sequenz auszuwählen, die gleich einer Sequenz mit einem Verhältnis von Spitzen- zu Durchschnittsleistung ist, das kleiner als ein vorbestimmter Wert ist, und sie als das Pilotsignal sendet,
**dadurch gekennzeichnet, dass**
die Sendevorrichtung eingerichtet ist, um die Sequenz zu suchen, indem die folgenden Schritte ausgeführt werden:

1) anfängliches Definieren eines begrenzten Phasensatzes S, eines leeren Satzes C, eines leeren Satzes D, einer reellen Zahl $\alpha \geq 1$ und einer reellen Zahl $0 \leq \beta \leq 1$,
2) Auswählen einer Anzahl Np Phasen $\varphi(1), \varphi(2), ... \varphi(Np)$ aus dem Phasensatz S, wobei Np kleiner oder gleich der Gesamtzahl n Unterträger ist,
3) Auswählen einer Kombination $\{\varphi(1), \varphi(2), ... \varphi(Np)\}$ der Np Phasen, die nicht zu dem Satz D gehört, und Addieren der ausgewählten Kombination zum Satz D,
4) Erstellen einer Sequenz mit Länge N, wobei die i-te Komponente $\exp[j\varphi(i)]$ ist und alle Komponenten außer der i-ten Komponente null sind,
5) Transformieren des Frequenzbereichs der erstellten Sequenz in den Zeitbereich, wobei die Sequenz durch inverse Fourier-Transformation bearbeitet wird,
6) Messen einer Wahrscheinlichkeits-Akkumulationsfunktion C-CDF $(\alpha)$ der durch inverse Fourier-Transformation bearbeiteten Sequenz,
7) wenn das Ergebnis der Messung C-CDF $(\alpha) < \beta$ erfüllt, Addieren der Sequenz, die durch inverse Fourier-Transformation erhalten wird, zu dem Satz C,
8) wenn eine Kombination $\{\varphi(1), \varphi(2), ... \varphi(Np)\}$ der Np Phasen, die nicht zu dem Satz D gehört, noch existiert, Wiederholen der Schritte von Schritt 2, ansonsten abschließend Erhalten einer Komponente des Satzes C und Ausgeben derselben als die Sequenz.

**8.** Sendevorrichtung nach Anspruch 7, wobei die Vorrichtung eingerichtet ist, um als das Pilotsignal die Sequenz zu senden, die gleich einer Sequenz mit dem Verhältnis von Spitzen- zu Durchschnittsleistung ist, das kleiner als ein vorbestimmter Wert ist, bezogen auf einen Frequenzblock mit einer Möglichkeit, eingeplant zu werden, wenn die Datensendung durchgeführt wird, und um einen Ausbreitungspfad und die Qualität des Ausbreitungspfads zu schätzen, indem das Pilotsignal verwendet wird, das gesendet wird, wenn ein Datenempfang durchgeführt wird.

**9.** Sendevorrichtung nach Anspruch 7, wobei in dem Fall, dass variable Frequenzblöcke zugewiesen werden, die Vorrichtung als das Pilotsignal die Sequenz einstellt, die gleich einer Sequenz mit dem Verhältnis von Spitzen- zu Durchschnittsleistung kleiner als der vorbestimmte Wert gemäß einem Zuweisungsmuster der Frequenzblöcke ist.

**10.** Sendevorrichtung nach Anspruch 9, wobei der Vorrichtung ein benachbarter Frequenzblock zugewiesen ist.

**11.** Sendevorrichtung nach Anspruch 9, wobei der Vorrichtung ein diskontinuierlicher Frequenzblock zugewiesen ist.

**12.** Sendevorrichtung nach Anspruch 7, wobei die Vorrichtung eingerichtet ist, um durch einen Steuerkanal von einer Basisstation Informationen darüber zu empfangen, welches Pilotmuster zu verwenden ist.

**13.** Pilotsignal-Multiplexverfahren für ein Sende-/Empfangssystem, in dem eine Mehrzahl Mobilstationen unter Verwendung eines Einzelträger-Sendesystems kommunizieren, wobei jede der Mehrzahl Mobilstationen einen Schritt des Sendens einer Sequenz als ein Pilotsignal durchführt, die gleich einer Sequenz mit einem Verhältnis von Spitzenzu Durchschnittsleistung ist, das kleiner als ein vorbestimmter Wert ist, der unter allen OFDM-Symbolen im Voraus eingestellt wird,

wobei jede der Mehrzahl Mobilstation eingerichtet ist, um eine Phase aus einem begrenzten Phasensatz auszuwählen, Sequenzen mit einer konstanten Amplitude umfassend die Phase in einem Frequenzbereich aus einem Signal in dem Frequenzbereich in ein Signal in einem Zeitbereich transformiert und eingerichtet ist, um aus den Sequenzen nach der Transformationen die Sequenz auszuwählen, die gleich einer Sequenz mit einem Verhältnis von Spitzen- zu Durchschnittsleistung ist, das kleiner als ein vorbestimmter Wert ist, und sie als das Pilotsignal sendet, **dadurch gekennzeichnet, dass**

die Sequenz gesucht wird, indem die folgenden Schritte ausgeführt werden:

1) anfängliches Definieren eines begrenzten Phasensatzes S, eines leeren Satzes C, eines leeren Satzes D, einer reellen Zahl $\alpha \geq 1$ und einer reellen Zahl $0 \leq \beta \leq 1$,

2) Auswählen einer Anzahl Np Phasen $\varphi(1)$, $\varphi(2)$, ... $\varphi(Np)$ aus dem Phasensatz S, wobei Np kleiner oder gleich der Gesamtzahl n Unterträger ist,

3) Auswählen einer Kombination $\{\varphi(1), \varphi(2), ... \varphi(Np)\}$ der Np Phasen, die nicht zu dem Satz D gehört, und Addieren der ausgewählten Kombination zum Satz D,

4) Erstellen einer Sequenz mit Länge N, wobei die i-te Komponente exp $[j\varphi(i)]$ ist und alle Komponenten außer der i-ten Komponente null sind,

5) Transformieren des Frequenzbereichs der erstellten Sequenz in den Zeitbereich, wobei die Sequenz durch inverse Fourier-Transformation bearbeitet wird,

6) Messen einer Funktion C-CDF $(\alpha)$ der durch inverse Fourier-Transformation bearbeiteten Sequenz,

7) wenn das Ergebnis der Messung C-CDF $(\alpha) < \beta$ erfüllt, Addieren der Sequenz, die durch inverse Fourier-Transformation erhalten wird, zu dem Satz C,

8) wenn eine Kombination $\{\varphi(1), \varphi(2), ... \varphi(Np)\}$ der Np Phasen, die nicht zu dem Satz D gehört, noch existiert, Wiederholen der Schritte von Schritt 2, ansonsten abschließend Erhalten einer Komponente des Satzes C und Ausgeben derselben als die Sequenz.

**14.** Pilotsignal-Multiplexverfahren nach Anspruch 13, wobei jede der Mehrzahl Mobilstationen als das Pilotsignal die Sequenz sendet, die gleich einer Sequenz mit dem Verhältnis von Spitzen- zu Durchschnittsleistung ist, das kleiner als ein vorbestimmter Wert ist, bezogen auf einen Frequenzblock mit einer Möglichkeit, eingeplant zu werden, wenn die Datensendung durchgeführt wird, und

eine Basisstation einen Ausbreitungspfad und die Qualität des Ausbreitungspfads schätzt, indem das Pilotsignal verwendet wird, das gesendet wird, wenn ein Datenempfang durchgeführt wird.

**15.** Pilotsignal-Multiplexverfahren nach Anspruch 13, wobei in dem Fall, dass jeder der Mehrzahl Mobilstationen ein variabler Frequenzblock zugewiesen ist, jede der Mehrzahl Mobilstationen als das Pilotsignal die Sequenz einstellt, die gleich einer Sequenz mit dem Verhältnis von Spitzen- zu Durchschnittsleistung kleiner als der vorbestimmte Wert gemäß einem Zuweisungsmuster der Frequenzblöcke ist.

**16.** Pilotsignal-Multiplexverfahren nach Anspruch 15, wobei jeder der Mehrzahl Mobilstationen ein benachbarter Frequenzblock zugewiesen ist.

**17.** Pilotsignal-Multiplexverfahren nach Anspruch 15, wobei jeder der Mehrzahl Mobilstationen ein diskontinuierlicher Frequenzblock zugewiesen ist.

**18.** Pilotsignal-Multiplexverfahren nach Anspruch 13, wobei eine Basisstation jeder der Mehrzahl Mobilstationen durch einen Steuerkanal Informationen darüber sendet, welches Pilotmuster zu verwenden ist.

**Revendications**

**1.** Système d'émission/réception comprenant : une station de base ; et une pluralité de stations mobiles communiquant en utilisant un système d'émission à porteuse unique,

dans lequel chacune de la pluralité de stations mobiles comprend des moyens pour émettre, en tant que signal pilote, une séquence qui est égale à une séquence avec un rapport de puissance crête sur moyenne inférieur à une valeur prédéterminée fixée à l'avance parmi tous les symboles OFDM,

dans lequel chacune de la pluralité de stations mobiles est conçue pour sélectionner une phase dans un ensemble limité de phases, transformer les séquences avec une amplitude constante qui comprend la phase dans un domaine fréquentiel, d'un signal dans le domaine fréquentiel à un signal dans un domaine temporel, et est conçue pour sélectionner la séquence, qui est égale à une séquence avec le rapport de puissance crête sur moyenne inférieur à la valeur prédéterminée, parmi les séquences après la transformation et l'émettre en tant que signal pilote, **caractérisé en ce que**

chacune des stations mobiles est conçue pour rechercher la séquence en exécutant les étapes suivantes :

1) définition initiale d'un ensemble limité de phases S, un ensemble vide C, un ensemble vide D, un nombre réel $\alpha \geq 1$ et un nombre réel $0 \leq \beta \leq 1$,

2) sélection d'un nombre de Np phases $\phi(1)$, $\phi(2)$, ... $\phi(Np)$ dans l'ensemble de phases S, Np étant inférieur ou égal au nombre total N de sous-porteuses,

3) sélection d'une combinaison $\{\phi(1), \phi(2), ... \phi(Np)\}$ des Np phases qui n'appartient pas à l'ensemble D, et ajout de la combinaison sélectionnée à l'ensemble D,

4) construction d'une séquence avec une longueur N où la $i^{ème}$ composante est $\exp[j\phi(i)]$ et toutes les composantes à l'exception de la $i^{ème}$ composante sont nulles,

5) transformation du domaine fréquentiel de la séquence construite en le domaine temporel en traitant la séquence par transformation de Fourier inverse,

6) mesure d'une fonction C-CDF$(\alpha)$ de la séquence traitée par transformation de Fourier inverse,

7) si le résultat de la mesure satisfait à C-CDF$(\alpha) < \beta$, ajout de la séquence qui est obtenue par transformation de Fourier inverse à l'ensemble C,

8) si une combinaison $\{\phi(1), \phi(2), ... \phi(Np)\}$ des Np phases qui n'appartient pas à l'ensemble D existe encore, répétition des étapes à partir de l'étape 2, autrement obtention finale d'une composante de l'ensemble C et délivrance de celle-ci en tant que séquence.

**2.** Système d'émission/réception selon la revendication 1, dans lequel chacune de la pluralité de stations mobiles est conçue pour émettre, en tant que signal pilote, la séquence qui est égale à une séquence avec le rapport de puissance crête sur moyenne inférieur à la valeur prédéterminée par rapport à un bloc de fréquences ayant une possibilité d'être planifié lorsqu'une émission de données est effectuée, et

la station de base est conçue pour estimer un trajet de propagation et la qualité du trajet de propagation en utilisant le signal pilote émis lorsqu'une réception de données est effectuée.

**3.** Système d'émission/réception selon la revendication 1, dans lequel, dans le cas où chacune de la pluralité de stations mobiles est conçue pour que lui soit attribué un bloc de fréquences variables, chacune de la pluralité de stations mobiles est conçue pour établir, en tant que signal pilote, la séquence qui est égale à une séquence avec le rapport de puissance crête sur moyenne inférieur à la valeur prédéterminée conformément à un motif d'attribution des blocs de fréquences.

**4.** Système d'émission/réception selon la revendication 3, dans lequel un bloc de fréquences contiguës est attribué à chacune de la pluralité de stations mobiles.

**5.** Système d'émission/réception selon la revendication 3, dans lequel un bloc de fréquences discontinues est attribué à chacune de la pluralité de stations mobiles.

**6.** Système d'émission/réception selon la revendication 1, dans lequel la station de base est conçue pour envoyer des informations à chacune de la pluralité de stations mobiles par l'intermédiaire d'un canal de contrôle, concernant le motif de pilote à utiliser.

**7.** Appareil d'émission pour communiquer en utilisant un système d'émission à porteuse unique, comprenant des moyens pour émettre, en tant que signal pilote, une séquence qui est égale à une séquence avec un rapport de puissance crête sur moyenne inférieur à une valeur prédéterminée fixée à l'avance parmi tous les symboles OFDM, dans lequel l'appareil est conçu pour sélectionner une phase dans un ensemble limité de phases, transforme les séquences avec une amplitude constante comprenant la phase dans un domaine fréquentiel, d'un signal dans le domaine fréquentiel en un signal dans un domaine temporel, et est conçu pour sélectionner la séquence qui est égale à une séquence avec le rapport de puissance crête sur moyenne inférieur à la valeur prédéterminée parmi les séquences après la transformation et l'émettre en tant que signal pilote, **caractérisé en ce que**

l'appareil d'émission est conçu pour rechercher la séquence en effectuant les étapes suivantes :

1) définition initiale d'un ensemble limité de phases S, un ensemble vide C, un ensemble vide D, un nombre

réel $\alpha \geq 1$ et un nombre réel $0 \leq \beta \leq 1$,

2) sélection d'un nombre de Np phases $\phi(1)$, $\phi(2)$, ... $\phi(Np)$ dans l'ensemble de phases S, Np étant inférieur ou égal au nombre total N de sous-porteuses,

3) sélection d'une combinaison $\{\phi(1), \phi(2), ... \phi(Np)\}$ des Np phases qui n'appartient pas à l'ensemble D, et ajout de la combinaison sélectionnée à l'ensemble D,

4) construction d'une séquence avec une longueur N où la $i^{ième}$ composante est $\exp[j\phi(i)]$ et toutes les composantes à l'exception de la $i^{ième}$ composante sont nulles,

5) transformation du domaine fréquentiel de la séquence construite en le domaine temporel en traitant la séquence par transformation de Fourier inverse,

6) mesure d'une fonction d'accumulation de probabilités C-CDF$(\alpha)$ de la séquence traitée par transformation de Fourier inverse,

7) si le résultat de la mesure satisfait à C-CDF$(\alpha) < \beta$, ajout de la séquence qui est obtenue par transformation de Fourier inverse à l'ensemble C,

8) si une combinaison $\{\phi(1), \phi(2), ... \phi(Np)\}$ des Np phases qui n'appartient pas à l'ensemble D existe encore, répétition des étapes à partir de l'étape 2, autrement obtention finale d'une composante de l'ensemble C et délivrance de celle-ci en tant que séquence.

8. Appareil d'émission selon la revendication 7, dans lequel l'appareil est conçu pour émettre, en tant que signal pilote, la séquence qui est égale à une séquence avec le rapport de puissance crête sur moyenne inférieur à la valeur prédéterminée par rapport à un bloc de fréquences ayant une possibilité d'être planifié lorsqu'une émission de données est effectuée, et pour estimer un trajet de propagation et la qualité du trajet de propagation en utilisant le signal pilote émis lorsqu'une réception de données est effectuée.

9. Appareil d'émission selon la revendication 7, dans lequel, dans le cas où des blocs de fréquences variables sont attribués, l'appareil est conçu pour établir, en tant que signal pilote, la séquence qui est égale à une séquence avec le rapport de puissance crête sur moyenne inférieur à la valeur prédéterminée conformément à un motif d'attribution des blocs de fréquences.

10. Appareil d'émission selon la revendication 9, dans lequel un bloc de fréquences contiguës est attribué à l'appareil.

11. Appareil d'émission selon la revendication 9, dans lequel un bloc de fréquences discontinues est attribué à l'appareil.

12. Appareil d'émission selon la revendication 7, dans lequel l'appareil est conçu pour recevoir des informations depuis une station de base par l'intermédiaire d'un canal de contrôle, concernant le motif de pilote à utiliser.

13. Procédé de multiplexage de signal pilote pour un système d'émission/réception dans lequel une pluralité de stations mobiles communiquent en utilisant un système d'émission à porteuse unique, dans lequel chacune de la pluralité de stations mobiles effectue une étape consistant à émettre, en tant que signal pilote, une séquence qui est égale à une séquence avec un rapport de puissance crête sur moyenne inférieur à une valeur prédéterminée fixée à l'avance parmi tous les symboles OFDM,

dans lequel chacune de la pluralité de stations mobiles est conçue pour sélectionner une phase dans un ensemble limité de phases, transformer les séquences avec une amplitude constante qui comprend la phase dans un domaine fréquentiel, d'un signal dans le domaine fréquentiel à un signal dans un domaine temporel, et est conçue pour sélectionner la séquence, qui est égale à une séquence avec le rapport de puissance crête sur moyenne inférieur à la valeur prédéterminée, parmi les séquences après la transformation et l'émettre en tant que signal pilote,

**caractérisé en ce que**

la séquence est recherchée en exécutant les étapes suivantes:

1) définition initiale d'un ensemble limité de phases S, un ensemble vide C, un ensemble vide D, un nombre réel $\alpha \geq 1$ et un nombre réel $0 \leq \beta \leq 1$,

2) sélection d'un nombre de Np phases $\phi(1)$, $\phi(2)$, ... $\phi(Np)$ dans l'ensemble de phases S, Np étant inférieur ou égal au nombre total N de sous-porteuses,

3) sélection d'une combinaison $\{\phi(1), \phi(2), ... \phi(Np)\}$ des Np phases qui n'appartient pas à l'ensemble D, et ajout de la combinaison sélectionnée à l'ensemble D,

4) construction d'une séquence avec une longueur N où la $i^{ième}$ composante est $\exp[j\phi(i)]$ et toutes les composantes à l'exception de la $i^{ième}$ composante sont nulles,

5) transformation du domaine fréquentiel de la séquence construite en le domaine temporel en traitant la séquence par transformation de Fourier inverse,

6) mesure d'une fonction C-CDF($\alpha$) de la séquence traitée par transformation de Fourier inverse,

7) si le résultat de la mesure satisfait à C-CDF($\alpha$) < $\beta$, ajout de la séquence qui est obtenue par transformation de Fourier inverse à l'ensemble C,

8) si une combinaison {$\phi(1)$, $\phi(2)$, ... $\phi(Np)$} des Np phases qui n'appartient pas à l'ensemble D existe encore, répétition des étapes à partir de l'étape 2, autrement obtention finale d'une composante de l'ensemble C et délivrance de celle-ci en tant que séquence.

**14.** Procédé de multiplexage de signal pilote selon la revendication 13, dans lequel chacune de la pluralité de stations mobiles émet, en tant que signal pilote, la séquence qui est égale à une séquence avec le rapport de puissance crête sur moyenne inférieur à la valeur prédéterminée par rapport à un bloc de fréquences ayant une possibilité d'être planifié lorsqu'une émission de données est effectuée, et une station de base estime un trajet de propagation et la qualité du trajet de propagation en utilisant le signal pilote émis lorsqu'une réception de données est effectuée.

**15.** Procédé de multiplexage de signal pilote selon la revendication 13, dans lequel, dans le cas où un bloc de fréquences variables est attribué à chacune de la pluralité de stations mobiles, chacune de la pluralité de stations mobiles établit, en tant que signal pilote, la séquence qui est égale à une séquence avec le rapport de puissance crête sur moyenne inférieur à la valeur prédéterminée conformément à un motif d'attribution des blocs de fréquences.

**16.** Procédé de multiplexage de signal pilote selon la revendication 15, dans lequel un bloc de fréquences contiguës est attribué à chacune de la pluralité de stations mobiles.

**17.** Procédé de multiplexage de signal pilote selon la revendication 15, dans lequel un bloc de fréquences discontinues est attribué à chacune de la pluralité de stations mobiles.

**18.** Procédé de multiplexage de signal pilote selon la revendication 13, dans lequel une station de base envoie des informations à chacune de la pluralité de stations mobiles par l'intermédiaire d'un canal de contrôle, concernant le motif de pilote à utiliser.

Fig. 1

power consumption: small

variation ranges from average

time

power consumption: large

variation ranges from average

time

\* both average powers are the same

Fig. 2

Fig. 3

data signal

pilot signal

Fig. 4

the whole bandwidth of system

frequency

data
transmission
bandwidth
of user 1

data
transmission
bandwidth
of user 2

data
transmission
bandwidth
of user 3

data
transmission
bandwidth
of user 4

Fig. 5A

bandwidth
allocated for
data transmission

Fig. 5B

bandwidth
allocated for
pilot transmission

Fig. 6

transmitting side (mobile station)

data sequence
generating part

1 1

pilot sequence
generating part

1 2

data/pilot
time
multiplexing
part

1 3

transmitted data

Fig. 7

Fig. 8

pilot signal (OFDM symbol)

pilot signal (OFDM symbol)

data signal (signal of single carrier system)

data signal (signal of single carrier system)

Fig. 9

bandwidth
allocated for
pilot transmission

bandwidth allocated for
data transmission

Fig. 10

```
                 ┌──────────────────────────────┐
                 │ set S={π/4, 3π/4, 5π/4, 7π/4},│  ⟲ S1
                 │ C = D = empty set (initial    │
                 │ setting), α(α≥1), β(0≤β≤1)     │
                 └──────────────────────────────┘
```

```
                      Np phase
                  combination that does not        NO
                      belong to D exist?        ──────────→  ( end )
                           S2
                          │YES
```

select Np phases $\phi(1)$, $\phi(2)$, ...,
$\phi(Np)$, $(\phi(i) \in S$, $i = 1, 2, ..., Np)$
(but combination that does not
belong to D) from S and add
selected combination $\phi(1)$,
$\phi(2)$, ..., $\phi(Np)$ to D   ⟲ S3

construct sequence with length N where the
ith $(i = 1, 2, ..., Np)$ component is exp $(j\phi(i))$ and
all the other components are "0", and transform
frequency domain to time domain for measuring
probability accumulation complementary
function C-CDF $(\alpha)$   ⟲ S4

```
        NO
    ←──────────   C-CDF (α) < β ?   ─── S5
                        │YES
```

add current sequence after
transformation to C   ⟲ S6

Fig. 11

```
  ┌──────────────┐   send frequency block information    ┌──────────┐
  │              │   ------------------------------→      │          │
  │ base station │   (pilot sequence information)         │  mobile  │
  │              │                                        │ station  │
  │              │   ←───── uplink (data, pilot) ──────   │          │
  └──────────────┘                                        └──────────┘
         3                                                     4
```